# EUROPEAN PATENT APPLICATION

(11) **EP 4 243 252 A1**
(43) Date of publication of application: **13.09.2023**
(21) Application number: 23160565.0
(22) Date of filing: 07.03.2023
(51) Int. Cl.: H02K 5/24, F16F 15/08, F16F 1/373

(54) **MOTOR SHOCK-ABSORBING STRUCTURE AND AN UNMANNED AERIAL VEHICLE USING THE SAME**

(30) Priority: 07.03.2022 CN 202220473974 U
(71) Applicant: Shanghai Autoflight Co., Ltd., Jinshan District Shanghai 201500 (CN)
(72) Inventor: TIAN, Yu, Shanghai 201500 (CN)
(74) Representative: MERH-IP Matias Erny Reichl Hoffmann Patentanwälte PartG mbB

(57) **Abstract**

A motor shock-absorbing structure having a mounting plate (1), a shock-absorbing assembly (2) and a mounting piece. The mounting plate (1) is provided with a first mounting hole (11), and the shock-absorbing assembly (2) is provided with a shock-absorbing seat (21) and a flange bushing (22). The shock-absorbing seat (21) is embedded in the first mounting hole (11), and the shock-absorbing seat (21) is provided with a second mounting hole. The flange bushing (22) is sleeved in the second mounting hole, and the flange bushing (22) is provided with a third mounting hole (221). The mounting piece passes through the third mounting hole (221) and is configured to be connected to a motor (100). The shock-absorbing seat (21) is embedded in the first mounting hole (11) of the mounting plate (1), the flange bushing (22) is clamped between the motor (100) and the mounting plate (1).

## Description

### FIELD OF THE DISCLOSURE

The invention relates to the technical field of unmanned aerial vehicle, in particular to a motor shock-absorbing structure and an unmanned aerial vehicle.

### BACKGROUND OF THE INVENTION

Motor is a device that converts electrical energy into mechanical energy, and it is installed on the mounting plate of the aircraft to provide power for the aircraft. The vibration of the motor includes the vibration of the motor itself and the vibration of the output shaft. If the vibration amplitude of the motor is too large, it will not only generate a lot of noise, but also affect the working life of the motor. Installing a shock-absorbing structure to reduce the vibration of the motor is known, but known motor shock-absorbing structures of some aircraft are heavy and take up a lot of space. Also, their installation onto an aircraft can be labor intensive.

### SUMMARY OF THE INVENTION

The purpose of the invention is to provide a motor shock-absorbing structure. The contemplated motor shock-absorbing structure takes up a relatively smaller space and is convenient to be installed onto the mounting plate of an aircraft.

For this purpose, the first aspect of the invention provides a motor shock-absorbing structure, which comprises:
a mounting plate provided with a first mounting hole;
a shock-absorbing assembly provided with a shock-absorbing seat and a flange bushing, wherein the shock-absorbing seat is embedded in the first mounting hole and the shock-absorbing seat is provided with a second mounting hole, and wherein the flange bushing is sleeved in the second mounting hole, and the flange bushing is provided with a third mounting hole; and
a mounting piece, the mounting piece passes through the third mounting hole and is configured to be connected to a motor.

Moreover, preferably one end of the mounting piece can abut against an end surface of the shock-absorbing assembly, the end surface can be away from the motor, and the other end of the mounting piece can be configured to be connected to the motor.

Moreover, the first mounting hole, the second mounting hole and the third mounting hole can be hole-to-hole aligned.

Moreover, the shock-absorbing seat can comprise a first shock-absorbing sleeve and a second shock-absorbing sleeve, and the first shock-absorbing sleeve can abut against the second shock-absorbing sleeve along the pass-through direction of the mounting piece, the second mounting hole can penetrate through the first shock-absorbing sleeve and the second shock-absorbing sleeve.

Moreover, the first shock-absorbing sleeve can comprise a first connecting part and a second connecting part, and the first connecting part can abut against an end surface of the mounting plate, the second connecting part can be connected to the first connecting part at an angle, and the second connecting part can be partially located in the first mounting hole.

Moreover, the second shock-absorbing sleeve can comprise a third connecting part and a fourth connecting part, and the third connecting part can abut against the end surface of the mounting plate, the fourth connecting part can be connected to the third connecting part at an angle, the fourth connecting part can be partially located in the first mounting hole, and the fourth connecting part can abut against the second connecting part.

Moreover, the shock-absorbing assembly can preferably further comprise a gasket, the gasket can be arranged on a side of the shock-absorbing seat, the side can be away from the flange bushing and the gasket can abut against an end surface of the shock-absorbing seat, the gasket can be provided with a fourth mounting hole, the fourth mounting hole and the third mounting hole can be hole-to-hole aligned, and the mounting piece can abut against an end surface of the gasket, and the mounting piece can be configured to be fixedly connected to the motor through the fourth mounting hole.

Moreover, the mounting plate can be provided with a plurality of first mounting holes, the motor shock-absorbing structure can further comprise a plurality of shock-absorbing assemblies and a plurality of mounting pieces, wherein the plurality of first mounting holes, the plurality of shock-absorbing assemblies, and the plurality of mounting pieces can be in one-to-one correspondence.

Moreover, the shock-absorbing seat can be made of polyurethane material.

The second aspect of the invention provides an unmanned aerial vehicle, which comprises the above-described motor shock-absorbing structure.

The beneficial effects of the invention:

In the motor shock-absorbing structure provided by the invention, the shock-absorbing seat is embedded in the first mounting hole of the mounting plate, and the flange bushing is clamped between the motor and the mounting plate to press the shock-absorbing seat, and the pulling force of the motor is transmitted to the shock-absorbing seat through the mounting piece. The mounting piece is configured to be connected to the motor through the third mounting hole, thereby connecting the mounting plate and the motor. After the shock being filtered by the shock-absorbing seat, it is transmitted to the mounting plate, thereby reducing the vibration of the motor. The motor shock-absorbing structure provided by the invention has a light weight of the shock-absorbing assembly and takes up little space, and is convenient to be applied to the shock absorption of the motor of an aircraft.

### BRIEF DESCRIPTION OF DRAWINGS

Figure 1 shows the structure diagram of the motor installed on the mounting plate provided by the embodiment of the present invention;
Figure 2 shows a sectional view of the motor installed on the mounting plate provided by the embodiment of the present invention;
Figure 3 shows an explosion diagram of the motor shock-absorbing structure provided by the embodiment of the present invention.

In the figures:
100 motor; 101 motor screw;
1 mounting plate; 11 first mounting hole;
2 shock-absorbing assembly; 21 shock-absorbing seat; 211 first shock-absorbing sleeve; 2111 first connecting part; 2112 second connecting part; 212 second shock-absorbing sleeve; 2121 third connecting part; 2122 fourth connecting part; 22 flange bushing; 221 third mounting hole; 23 gasket.

### DETAILED DESCRIPTION

Below in conjunction with accompanying drawings and embodiments the invention is described in further detail. It can be understood that the specific embodiments described here are only used to explain the invention, rather than limit the invention. In addition, it should be noted that, for the convenience of description, only some structures related to the present invention are shown in the drawings but not all structures.

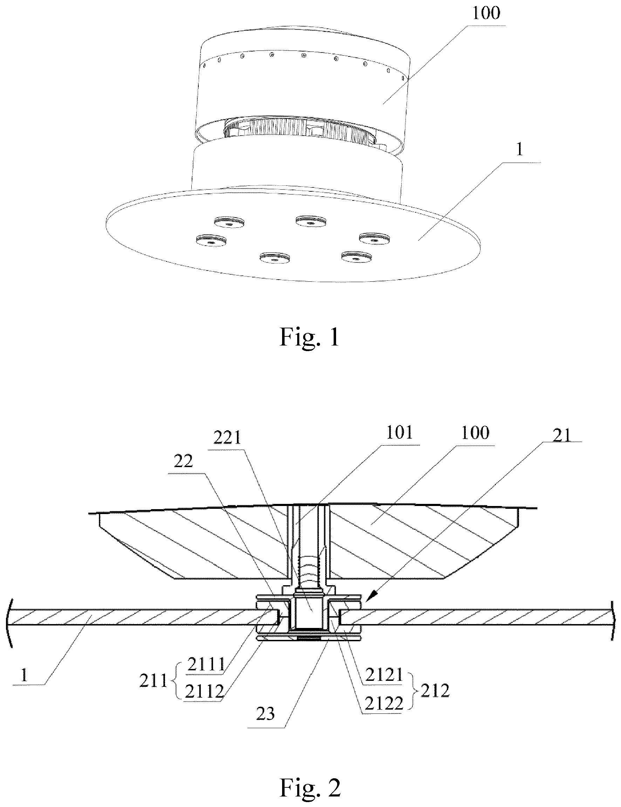

This embodiment provides a motor shock-absorbing structure, as shown in Figures 1 to 3. The motor shock-absorbing structure comprises a mounting plate 1, a shock-absorbing assembly 2, and a mounting piece. The mounting plate 1 is provided with a first mounting hole 11; the shock-absorbing assembly 2 comprises a shock-absorbing seat 21 and a flange bushing 22. The shock-absorbing seat 21 is embedded in the first mounting hole 11, and the shock-absorbing seat 21 is provided with a second mounting hole. The flange bushing 22 is sleeved in the second mounting hole, and part of the flange bushing 22 abuts against the inner wall of the second mounting hole of the shock-absorbing seat 21. The flange bushing 22 is provided with a third mounting hole 221, the mounting piece passes through the third mounting hole 221 to be connected to the motor 100.

In the motor shock-absorbing structure provided in this embodiment, the shock-absorbing seat 21 can be embedded in the first mounting hole 11 of the mounting plate 1, and the flange bushing 22 can be clamped between the motor 100 and the mounting plate 1 to press the shock-absorbing seat 21, the mounting piece can pass through the third mounting hole 221 to connect to the motor 100, so as to connect the mounting plate 1 and the motor 100. The pulling force of the motor 100 can be transmitted to the shock-absorbing seat 21 through the mounting piece, and then transmitted to the mounting plate 1 after the shock being filtered by the shock-absorbing seat 21, thereby reducing the vibration of the motor 100. In the motor shock-absorbing structure provided in this embodiment, the shock-absorbing assembly 2 is light in weight and space saving, and is convenient to be applied to the shock absorption of the motor 100 of an aircraft.

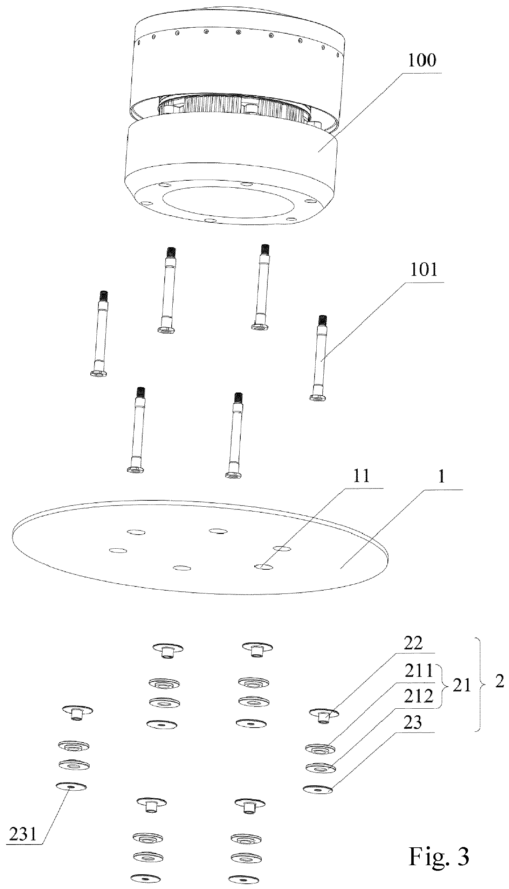

Further, as shown in FIG. 2 and FIG. 3, the shock-absorbing seat 21 comprises a first shock-absorbing sleeve 211 and a second shock-absorbing sleeve 212, and the first shock-absorbing sleeve 211 abuts against the second shock-absorbing sleeve 212 along the pass-through direction of the mounting piece. The second mounting hole penetrates through the first shock-absorbing sleeve 211 and the second shock-absorbing sleeve 212. In this embodiment, the first shock-absorbing sleeve 211 is arranged in a direction close to the motor 100, the second shock-absorbing sleeve 212 is arranged in a direction away from the motor 100, and the mounting pieces pass through the second shock-absorbing sleeve 212 and the first shock-absorbing sleeve 211 successively. However, it can be understood that the shock-absorbing seat 21 may also be provided as an integrally formed structure in some application scenarios.

Specifically, as shown in FIG. 2 and FIG. 3, the first shock-absorbing sleeve 211 can comprise a first connecting part 2111 and a second connecting part 2112. An end surface of the first connecting part 2111 can be pressed by the flange bushing 22, and the other end surface can abut against the end surface of the mounting plate 1, the second connecting part 2112 can be connected to the first connecting part 2111 at an angle, and the second connecting part 2112 can be partially located in the first mounting hole 11. The second shock-absorbing sleeve 212 can comprise a third connecting part 2121 and a fourth connecting part 2122, the third connecting part 2121 can abut against the other end surface of the mounting plate 1, and the fourth connecting part 2122 can be connected to the third connecting part 2121 at an angle, the fourth connecting part 2122 can be partially located in the first mounting hole 11, and the fourth connecting part 2122 abuts against the second connecting part 2112. More specifically, the second connecting part 2112 can be connected to the first connecting part 2111 at an angle of 90°, the fourth connecting part 2122 is connected to the third connecting part 2121 at an angle of 90°, and one end of the second connecting part 2112 abuts against the fourth connecting part 2122, the end of the second connecting part 2112 is far away from the first connecting part 2111.

Specifically, in this embodiment, the first shock-absorbing sleeve 211 and the second shock-absorbing sleeve 212 have the same structure, which reduces the difficulty of processing and improves the processing efficiency, and the first connecting part 2111 and the second connecting part 2112 can be integrally formed, and the third connecting part 2121 and the fourth connecting part 2122 can be integrally formed.

Specifically, the first shock-absorbing sleeve 211 and the second shock-absorbing sleeve 212 of the shock-absorbing seat 21 can both be made of polyurethane material, which has high stability, good heat insulation, sound insulation, shock resistance, and anti-vibration performance. It is not easy to compress and deform under pressure, and can better absorb the high-frequency vibration of the motor 100. The performance of polyurethane material is between plastic and rubber, oil resistance, wear resistance, low temperature resistance, aging resistance, high hardness and elasticity.

Specifically, the thickness and hardness of the shock-absorbing seat 21 can be adjusted to change the shock absorbing effect of the shock-absorbing assembly 2. According to the rotation speed of the motor 100 and the different matching paddles/ propeller blades, the shock-absorbing seat 21 with different thickness and hardness can be replaced to adjust the absorbing effect.

Specifically, as shown in FIGS. 2 and 3, the shock-absorbing assembly 2 can further comprise a gasket 23, the gasket 23 is arranged on a side of the shock-absorbing seat 21, the side of the shock-absorbing seat 21 is away from the flange bushing 22, and the gasket 23 abuts against an end surface of the shock-absorbing seat 21. The gasket 23 can be provided with a fourth mounting hole 231, the fourth mounting hole 231 and the third mounting hole 221 are hole-to-hole aligned, and the mounting piece abuts against an end surface of the gasket 23, and the mounting piece is configured to be fixedly connected to the motor 100 through the fourth mounting hole 231. In this embodiment, the flange bushing 22 is clamped between the motor 100 and the mounting plate 1 to press and abut against the first connecting part 2111 of the first shock-absorbing sleeve 211, and the gasket 23 can be clamped between the shock-absorbing seat 21 and the mounting piece, and abuts against the third connecting part 2121 of the second shock-absorbing sleeve 212, the mounting piece passes through the gasket 23 and the flange bushing 22 successively to be connected to the motor 100. In other embodiments, the flange bushing 22 can comprise a gasket 23, that is to say, the gasket 23 is used as the part of the flange bushing 22 which is below the mounting plate 1, and the upper part of the flange bushing 22 above mounting plate 1 and the lower part of the flange bushing 22 under the mounting plate 1 can be abutted, connected by threads, or integrally formed, which is not limited here.

Further, one end of the mounting piece can abut against an end surface of the shock-absorbing assembly 2, the end surface of the shock-absorbing assembly 2 is away from the motor 100, that is, the mounting piece abuts against the gasket 23, and the other end of the mounting piece is configured to be connected to the motor 100 to realize the connection between the shock-absorbing assembly 2 and the motor 100. Specifically, as shown in Figs. 2 and 3, the mounting piece can be screwed to the motor screw 101 of the motor 100. One end of the motor screw 101 is provided with an external thread, and the other end is provided with an internal threaded hole. In this embodiment, the mounting piece is a bolt, and one end of the motor screw 101 can be threadedly connected to the motor 100, and the bolt passes through the fourth mounting hole 231 of the gasket 23, the third mounting hole 221 of the flange bushing 22, the internal threaded hole at the other end of the motor screw 101, and can be configured to be threadedly connected to the internal threaded hole, so as to realize the connection between the mounting plate 1 and the motor 100.

Specifically, the first mounting hole 11, the second mounting hole, the third mounting hole 221 and the fourth mounting hole 231 are hole-to-hole placed (or aligned), that is, the first mounting hole 11, the second mounting hole, the third mounting hole 221 and the fourth mounting hole 231 have the same axis, which is convenient for the mounting pieces to pass through.

Specifically, as shown in Fig. 1 and Fig. 3, the mounting plate 1 is provided with a plurality of first mounting holes 11, and the motor shock-absorbing structure is further provided with a plurality of shock-absorbing assemblies 2 and a plurality of mounting pieces. The plurality of first mounting holes 11, the plurality of shock-absorbing assemblies 2, and the plurality of mounting pieces are in one-to-one correspondence. In this embodiment, there are six first mounting holes 11, six groups of shock-absorbing assemblies 2, and six mounting pieces, one mounting piece passes through one group of shock-absorbing assemblies 2 and one first mounting hole 11, all the pulling torque of the motor 100 is shared by one mounting plate 1, six groups of shock-absorbing assemblies 2 and mounting pieces.

This embodiment also provides an unmanned aerial vehicle, comprising the motor shock-absorbing structure mentioned above, the shock-absorbing assembly is light in weight, space saving, and can effectively absorb the high-frequency vibration of the motor 100.

In the description of this embodiment, unless otherwise specified and limited, the terms "connected", "connected" and "fixed" should be understood in a broad sense, for example, it can be a fixed connection, a detachable connection, or being an integral piece, it can be mechanically or electrically connected, it can be directly connected or indirectly connected through an intermediary, and it can be the internal communication of two components or the interaction relationship between two components. Those of ordinary skill in the art can understand the specific meanings of the above terms in the present disclosure in specific situations.

In this embodiment, unless otherwise clearly specified and limited, the first feature being "on" or "under" the second feature may include direct contact between the first and second features, and may also include the first and second features being in indirect contact with each other, e.g., the features are not in direct contact but through another feature between them. Moreover, the first feature being "above" or "on" the second feature include that the first feature is directly above and obliquely above the second feature, or simply means that the first feature is horizontally higher than the second feature. The first feature being "below," "beneath," and "under" the second feature include that the first feature is directly below and obliquely below the second feature, or simply means that the first feature has a lower level than the second feature.

In the description of this embodiment, the orientation or positional relationship of the terms "up," "down," and "right" are based on the orientation or positional relationship shown in the drawings, and are only for the convenience of description and simplification of operation, rather than indicating or It should not be construed as limiting the invention by implying that a referenced device or element must have a particular orientation, be constructed, and operate in a particular orientation. In addition, the terms "first" and "second" are only used to distinguish in description, and have no special meaning.

Apparently, the above-mentioned embodiments of the present invention are only examples for illustrating the present invention, rather than limiting the implementation manner of the present invention. Various obvious changes, readjustments and substitutions can be made by those skilled in the art without departing from the protection scope of the present invention. It is not necessary and impossible to exhaustively list all implementation manners here. All modifications, equivalent replacements and improvements made within the spirit and principles of the invention shall be included in the protection scope of the claims of the invention.

The above embodiments are merely illustrative of the principles of the present invention and its effects, which is not intended to limit the invention. Any person skilled in the art can modify or alter the above embodiments without departing from the purpose and the scope of the present invention. Accordingly, all equivalent modifications or alterations made by persons having ordinary knowledge in the art, without departing from the purpose and technical ideas disclosed in the present invention, shall still be covered by the claims of the present invention.

## Claims

1. A motor shock-absorbing structure comprising:
a mounting plate (1) provided with a first mounting hole (11);
a shock-absorbing assembly (2) provided with a shock-absorbing seat (21) and a flange bushing (22);
wherein the shock-absorbing seat (21) is embedded in the first mounting hole (11);
wherein the shock-absorbing seat (21) is provided with a second mounting hole;
wherein the flange bushing (22) is sleeved in the second mounting hole;
wherein the flange bushing (22) is provided with a third mounting hole (221); and
a mounting piece, the mounting piece passes through the third mounting hole (221) and is configured to be connected to a motor (100).

2. The motor shock-absorbing structure according to claim 1, wherein a first end of the mounting piece abuts against an end surface of the shock-absorbing assembly (2), and the end surface is disposed away from the motor (100), and a second end of the mounting piece is configured to be connected to the motor (100).

3. The motor shock-absorbing structure according to claim 1, wherein the first mounting hole (11), the second mounting hole, and the third mounting hole (221) are hole-to-hole aligned.

4. The motor shock-absorbing structure according to claim 1, wherein the shock-absorbing seat (21) comprises a first shock-absorbing sleeve (211) and a second shock-absorbing sleeve (212), and wherein the first shock-absorbing sleeve (211) abuts against the second shock-absorbing sleeve (212) along a pass-through direction of the mounting piece, wherein the second mounting hole penetrates through the first shock-absorbing sleeve (211) and the second shock-absorbing sleeve (212).

5. The motor shock-absorbing structure according to claim 1, wherein the first shock-absorbing sleeve (211) comprises a first connecting part (2111) and a second connecting part (2112), and wherein the first connecting part (2111) abuts against an end surface of the mounting plate (1), the second connecting part (2112) is connected to the first connecting part (2111) at an angle, and the second connecting part (2112) is partially located in the first mounting hole (11).

6. The motor shock-absorbing structure according to claim 5, wherein the second shock-absorbing sleeve (212) comprises a third connecting part (2121) and a fourth connecting part (2122), and wherein the third connecting part (2121) abuts against the end surface of the mounting plate (1), wherein the fourth connecting part (2122) is connected to the third connecting part (2121) at an angle, wherein the fourth connecting part (2122) is partially located in the first mounting hole (11), and wherein the fourth connecting part (2122) abuts against the second connecting part (2112).

7. The motor shock-absorbing structure according to claim 1, wherein the shock-absorbing assembly (2) further comprises a gasket (23), wherein the gasket (23) is arranged on a side of the shock-absorbing seat (21), and wherein the side is disposed away from the flange bushing (22) and the gasket (23) abuts against an end surface of the shock-absorbing seat (21), and wherein the gasket (23) has a fourth mounting hole (231), wherein the fourth mounting hole (231) and the third mounting hole (221) are hole-to-hole aligned, and the mounting piece abuts against an end surface of the gasket (23), and the mounting piece is configured to be fixedly connected to the motor (100) through the fourth mounting hole (231).

8. The motor shock-absorbing structure according to claim 1, further comprising a plurality of shock-absorbing assemblies (2) and a plurality of mounting pieces, wherein a plurality of first mounting holes (11), the plurality of shock-absorbing assemblies (2), and the plurality of mounting pieces are one-to-one aligned, and wherein the mounting plate (1) is provided with the plurality of first mounting holes (11).

9. The motor shock-absorbing structure according to claim 1, wherein the shock-absorbing seat (21) is made of polyurethane material.

10. An unmanned aerial vehicle, which is **characterized in that** it includes the motor shock-absorbing structure described in any one of the above claims 1-9.
